# EUROPÄISCHE PATENTSCHRIFT

(11) **EP 1 562 796 B1**
(45) Veröffentlichungstag und Bekanntmachung des Hinweises auf die Patenterteilung: **13.09.2006**
(21) Anmeldenummer: 03779997.0
(22) Anmeldetag: 19.11.2003
(51) Int. Cl.: B60R 21/01

(54) **SYSTEM UND VERFAHREN ZUM ERKENNEN DER SITZBELEGUNG IN EINEM FAHRZEUG**
SYSTEM AND METHOD FOR RECOGNITION OF SEAT OCCUPANCY IN A VEHICLE
SYSTEME ET PROCEDE POUR RECONNAITRE L'OCCUPATION D'UN SIEGE DANS UN VEHICULE

(30) Priorität: 20.11.2002 DE 10254198
(43) Veröffentlichungstag der Anmeldung: 17.08.2005
(73) Patentinhaber: SIEMENS AKTIENGESELLSCHAFT, 80333 München (DE)
(72) Erfinder: HOFBECK, Klaus, 92318 Neumarkt (DE); RÖSEL, Birgit, 93055 Regensburg (DE)
(86) Internationale Anmeldenummer: PCT/EP2003/012965
(87) Internationale Veröffentlichungsnummer: WO 2004/045918

(56) Entgegenhaltungen:
- DE-A- 19 839 696
- US-A1- 2002 140 215
- US-B1- 6 199 904
- US-B1- 6 462 701
- "Entwicklung eines Mikrochips zur Realisierung von Identifikationssystemen" FH AALEN EDA-ZENTRUM, [Online] XP002272961 Gefunden im Internet: <URL:http://www.eda.fh-aalen.de/Projekte/i dentsys/Dokumente/rfid.pdf/> [gefunden am 2004-03-10]
- WILLIAMSON F R ET AL: "A CODED RADAR REFLECTOR FOR REMOTE IDENTIFICATION OF PERSONNEL AND VEHICLES" PROCEEDINGS OF THE NATIONAL RADAR CONFERENCE. LYNNFIELD, APR. 20 - 22, 1993, NEW YORK, IEEE, US, 20. April 1993 (1993-04-20), Seiten 186-191, XP002065550

## Beschreibung

Die Erfindung betrifft ein System zum Erkennen der Sitzbelegung in einem Fahrzeug, mit mindestens einem Mikrowellensender und mindestens einem Mikrowellenempfänger, wobei der mindestens eine Mikrowellensender und der mindestens eine Mikrowellenempfänger so angeordnet sind, dass von dem mindestens einen Mikrowellensender ausgesendete Mikrowellenstrahlung über einen Strahlungsweg den mindestens einen Mikrowellenempfänger zumindest bei unbelegtem Sitz erreichen kann und dass sich in Abhängigkeit der Sitzbelegung ein Objekt in dem Strahlungsweg befinden kann, so dass die von dem Mikrowellenempfänger empfangene Strahlung in Abhängigkeit der Sitzbelegung beeinflusst werden kann.

Die Erfindung betrifft weiterhin ein Verfahren zum Erkennen der Sitzbelegung in einem Fahrzeug, mit den Schritten: Aussenden von Mikrowellenstrahlung und Empfangen der Mikrowellenstrahlung, wobei sich die ausgesendete Mikrowellenstrahlung über einen Strahlungsweg ausbreitet und sich in Abhängigkeit der Sitzbelegung ein Objekt in dem Strahlungsweg befinden kann, so dass die empfangene Strahlung in Abhängigkeit der Sitzbelegung beeinflusst werden kann.

Derartige Systeme und Verfahren sind bekannt. Sie dienen insbesondere dazu, das Auslöseverhalten eines Airbags in Abhängigkeit der Sitzbelegung zu beeinflussen.

Ein Beispiel für ein derartiges System und Verfahren ist aus der US 6,199,904 B1 bekannt. Dabei werden Mikrowellen von einem Mikrowellensender auf eine reflektierende Struktur in einem Fahrzeugsitz gesendet. Die reflektierten Mikrowellen werden von einem Mikrowellenempfänger nachgewiesen. Da die Intensität der reflektierten Mikrowellen davon abhängt, ob die Mikrowellenstrahlung durch eine Person, die den Sitz belegt, abgeschwächt wird, kann aus dem Auswertungsergebnis auf die Sitzbelegung geschlossen werden.

Ein solches System und ein solches Verfahren ist auch aus der US 6,462,701 B1, die als nächstliegender Stand der Technik betrachtet wird, bekannt. Im Unterschied zur US 6,199,904 B1 werden hier speziell Radarwellen, d. h. niederfrequente Mikrowellen verwendet.

Nachteilig an den bekannten Systemen und Verfahren ist jedoch, dass der Airbagsteuerung nicht immer zuverlässige Auswertungen zugrunde gelegt werden. Beispielsweise kann es möglich sein, dass eine Reflexion an anderen Objekten erfolgt als an den dafür vorgesehenen Reflexionsobjekten in dem Sitz. Es würde somit vorgetäuscht, dass der Sitz nicht belegt ist, was ein Sperren des Airbags zur Folge haben könnte. Dies kann lebensgefährliche Konsequenzen für die Insassen des Fahrzeugs haben. Weiterhin sind die im Rahmen der Ausführung erforderlichen Kalibrierungen sehr aufwendig, was die Kosten des Systems in die Höhe treibt. Ferner sind alle zusätzlichen Auswertungen mit Rechenzeit verbunden, was einer dynamischen Messung, das heißt einer Messung erst im Falle eines Aufpralls des Fahrzeugs, entgegenstünde.

Der Erfindung liegt die Aufgabe zugrunde, ein System und ein Verfahren zur Verfügung zu stellen, die die Nachteile des Standes der Technik überwinden und die insbesondere eine zuverlässige und kostengünstige Sitzbelegungserkennung ermöglichen.

Diese Aufgabe wird mit den Merkmalen der unabhängigen Ansprüche gelöst.

Vorteilhafte Ausführungsformen der vorliegenden Erfindung sind in den abhängigen Ansprüchen angegeben.

Die Erfindung baut auf dem gattungsgemäßen System dadurch auf, dass die Position des Objekts in dem Strahlungsweg auf der Grundlage der Beugung der Mikrowellen um das Objekt die von dem Mikrowellensender empfangene Intensität beeinflusst und dass die von dem Mikrowellensender empfangene Intensität Informationen über die Position des Objekts liefert. Da Mikrowellenstrahlung, im Gegensatz zu beispielsweise Infrarotstrahlung, aufgrund ihrer Wellenlänge ausgeprägte Beugungserscheinungen an einem in dem Strahlungsweg angeordneten Objekt zeigen kann, ist es möglich, die Intensitätsänderungen aufgrund von Beugungseffekten zu nutzen. Beispielsweise kann das Vorbeugen einer Person auf einem Sitz erkannt werden, wenn diese dabei einerseits einen in der Sitzfläche angeordneten Reflektor ausreichend abschirmt, andererseits aber einen in der Rückenlehne angeordneten Reflektor in der Weise freigibt, dass um das Objekt gebeugte Mikrowellen den Reflektor erreichen können. Ein leerer Sitz lässt sich somit von einem mit einem Erwachsenen besetzten Sitz und beispielsweise auch von einem mit Kind und Kindersitz besetzten Sitz unterscheiden, da im letzten Fall aufgrund der Erhöhung durch den Kindersitz auch eine Beugung zu einem in der Sitzfläche angeordneten Reflektor erfolgen kann.

Erfindungsgemäß ist im Strahlungsweg zwischen Mikrowellensender und Mikrowellenempfänger mindestens ein Reflektor vorgesehen ist, der den Strahlungsweg in mindestens einen ersten Strahlungsweg und mindestens einen zweiten Strahlungsweg aufteilt.

Der mindestens eine Reflektor ist dabei eine modulierende Backscatter-Vorrichtung. Die Modulation der Mikrowellenstrahlung durch die Backscatter-Vorrichtung bewirkt, dass der Reflektor ohne weiteres von anderen metallisch leitfähigen Gegenständen unterschieden werden kann. Findet also beispielsweise eine Reflexion der Mikrowellenstrahlung am Gehäuse eines Laptops statt, mit dem der Beifahrer in einem PKW arbeitet, so führt dies nicht dazu, dass das System von einem unbelegten Sitz ausgeht. Ein Airbag würde daher im Falle eines Aufpralls zünden.

Über das durch Modulation aufgeprägte Muster kann die Reflexion außerdem eindeutig einer Backscatter-Vorrichtung zugeordnet werden.

Grundsätzlich wäre es beispielsweise möglich, einen Mikrowellensender beispielsweise im Cockpit oder im Dachbedienbereich eines Fahrzeugs anzuordnen und Mikrowellenempfänger in den Sitzen. Ebenfalls ist eine umgekehrte Anordnung möglich. Besonders nützlich kann es aber sein, Mikrowellensender und Mikrowellenempfänger vorzugsweise an derselben Position anzuordnen und die Sitze mit Reflektoren zu bestücken.

Die Begriffe "Reflektor, reflektieren, etc." werden im Rahmen der vorliegenden Offenbarung mit sehr allgemeiner Bedeutung benutzt. Es sind nicht nur Reflexionen im klassischen Sinne gemeint, sondern auch beispielsweise das Zurücksenden von elektromagnetischer Strahlung mittel eines Backscatter-Prozesses.

Die Erfindung ist in besonders vorteilhafter Weise dadurch weitergebildet, dass die von der Mikrowellenstrahlung zurückgelegte Wegstrecke zwischen Mikrowellensender und Mikrowellenempfänger durch Laufzeitmessung ermittelbar ist. Hierdurch ist es möglich, die Einstellung des Sitzes zu ermitteln. Auf diese Weise liegen weitere Informationen für eine Airbagsteuerung vor.

In diesem Zusammenhang ist es besonders nützlich, dass die Position eines Sitzes ermittelbar ist und dass aus dem Ergebnis der Ermittelns der Wegstrecke und dem Ergebnis des Ermittelns der Position des Sitzes ermittelt werden kann, ob sich die von dem Mikrowellenempfänger empfangene Strahlung über den Strahlungsweg zwischen Mikrowellensender und Mikrowellenempfänger ausgebreitet hat. Derartige Plausibilitätserwägungen sind im Falle der Verwendung einer modulierenden Backscatter-Vorrichtung als Reflektor grundsätzlich zwar entbehrlich, können gleichwohl aber im Sinne einer Redundanz zum Einsatz kommen. Besonders nützlich sind die Erwägungen aufgrund der Laufzeit der Mikrowellensignale aber, wenn der reflektierten Mikrowellenstrahlung kein Muster, beispielsweise durch einen Backscatter-Prozess, aufmoduliert sind. Dann kann durch zusätzliche Auswertung der Position des Sitzes festgestellt werden, ob die Reflexion an einem Reflektor beispielsweise in der Sitzlehne stammen kann oder ob die Reflexion beispielsweise von einem Laptop auf dem Schoß des Beifahrers herrührt.

Das erfindungsgemäße System ist insbesondere dadurch in vorteilhafter Weise weitergebildet, dass der mindestens eine Mikrowellensender und der mindestens eine Mikrowellenempfänger als mindestens eine Mikrowellensende- und -empfangsvorrichtung mit einer Sende- und Empfangsantenne realisiert sind. Die Mikrowellenstrahlung gelangt somit von der Mikrowellensende- und -empfangsvorrichtung über den ersten Strahlungsweg zu dem Reflektor und von dem Reflektor über den zweiten Strahlungsweg zu der Mikrowellensende- und -empfangsvorrichtung zurück, wobei somit der mindestens eine erste Strahlungsweg und der mindestens eine zweite Strahlungsweg zumindest im Wesentlichen identisch sind.

Die Mikrowellensende- und -empfangsvorrichtung kann sich beispielsweise im Armaturenbrett des Fahrzeugs befinden. Bringt man den Reflektor in der Rückenlehne des zu überwachenden Sitzes an, so durchläuft der Strahlengang der ausgesendeten und der reflektierten Mikrowellenstrahlung gegebenenfalls den oberen Rumpfbereich eines Insassen. Sitzt eine Person ordnungsgemäß auf dem Sitz, so deckt sie den Reflektor ab, und die Empfangsantenne empfängt einen um circa sechs Größenordnungen kleineren Pegel als bei Abwesenheit der Person. Bei einer Anordnung der Antenne im Armaturenbrett beziehungsweise im Cockpit und einer Anordnung des Reflektors in der Rücksitzlehne kann sogar erkannt werden, wenn sich eine Person nicht in ordnungsgemäßer Sitzposition befindet. Neigt sich die Person beispielsweise nach vorn, kann durch Beugung um den Körper jedoch ein Anteil der ausgesendeten Mikrowellenstrahlung an den Reflektor gelangen. Dieses typische Muster wird der Airbag-Steuereinheit übermittelt, die dann auswertet, ob der Airbag noch ausgelöst werden kann.

Ebenfalls dient die Anordnung der Antenne im Cockpit und des Reflektors in der Rückenlehne dazu, dass beispielsweise auf dem Beifahrersitz ein Kindersitz sicher transportiert werden kann. Der Großteil der Mikrowellenstrahlung wird ungehindert zum Reflektor gelangen und von diesem zurück zum Empfänger, so dass das Auslösen eines Airbags verhindert werden kann, da der Kindersitz im Allgemeinen aus Kunststoff besteht und die Strahlung durch den Körper des Kindes gedämpft wird.

Als zusätzliche Sicherheitsmaßnahme ist möglich, einen weiteren Reflektor an dem Kindersitz anzubringen. Auf diese Weise wird auch Mikrowellenstrahlung reflektiert, die ansonsten im Kindersitz oder in dem im Kindersitz sitzenden Kind absorbiert worden wäre. Eine Auslösen des Airbags kann somit noch zuverlässiger verhindert werden. Verwendet man modulierende Backscatter-Vorrichtungen als Reflektoren, so können die Backscatter-Vorrichtungen in der Sitzlehne beziehungsweise auf dem Kindersitz die Signale in unterschiedlicher Weise modulieren, so dass in eindeutiger Weise erkannt werden kann, dass sich ein Kindersitz auf dem Sitz befindet.

Es ist besonders nützlich, dass eine Steuereinheit vorgesehen ist, die in Abhängigkeit der von dem Mikrowellenempfänger empfangenen Strahlung Funktionen im Fahrzeug triggert, sperrt oder freigibt. Die Sitzbelegungserkennung kann auch im Zusammenhang mit anderen Funktionen im Fahrzeug sinnvoll sein, die Freigabe beziehungsweise Sperrung eines Airbags ist jedoch eine besonders wichtige Errungenschaft der vorliegenden Erfindung.

Der erfindungsgemäße Reflektor kann vorteilhafterweise auch als elektrisch leitfähige Folie ausgebildet sein. Eine solche Folie kann in einfacher Weise in die Lehne eines Sitzes eingearbeitet werden, wobei praktisch kein zusätzlicher Einbauraum benötigt wird und praktisch kein zusätzliches Gewicht beigesteuert wird.

Das erfindungsgemäße System kann dadurch weitergebildet sein, dass die Backscatter-Vorrichtung als passive, semipassive, semiaktive oder aktive Backscatter-Vorrichtung realisiert ist. Passive Backscatter-Vorrichtungen sind besonders einfach aufgebaut, sie benötigen keine zusätzliche Energieversorgung, und sie stellen insofern eine besonders kostengünstige Lösung zur Verfügung. Semipassive Backscatter-Vorrichtungen werden mit einem zusätzlichen Verstärker betrieben, der eine geringfügige elektrische Leistung aufnimmt. Sie haben gegenüber passiven Backscatter-Vorrichtungen den Vorteil, dass mit höherer Intensität reflektiert werden kann. Auf dieser Grundlage kann zuverlässiger ausgewertet werden. Eine besonders zuverlässige Auswertung würde eine aktive Backscatter-Vorrichtung bewirken, das heißt eine Backscatter-Vorrichtung mit aktiven elektronischen Bauelementen. Hierdurch kann aufgrund erhöhter Mikrowellenintensitäten eine besonders zuverlässige Auswertung ermöglicht werden. Allerdings ist die Belastung der Fahrzeuginsassen aufgrund der Mikrowellenstrahlung bei dieser Ausführungsform der vorliegenden Erfindung höher als bei passiven Backscatter-Vorrichtungen. Der semiaktive Backscatter ist ähnlich dem semipassiven Backscatter, weist aber eine Verstärkung des zu reflektierenden Signals auf.

Das erfindungsgemäße System kann in besonders vorteilhafter Weise dadurch weitergebildet sein, dass der mindestens eine Mikrowellensender und/oder der mindestens eine Mikrowellenempfänger Bestandteile eines in dem Fahrzeug installierten Zugangskontroll- und Zündstartsystems sind. Bei mikrowellenbasierten Zugangskontroll- und Startsystemen befindet sich die Antenne zur Abdeckung des Innenraums im Allgemeinen in einer solchen Position, dass sie auch in den Fahrzeugsitzen angeordnete Reflektoren ansprechen kann. Folglich kann durch die Ausführungsform der vorliegenden Erfindung, bei der Komponenten des Zugangskontroll- und Startsystems für die Sitzbelegungserkennung verwendet werden, eine integrierende und somit kostenreduzierende Maßnahme zur Verfügung gestellt werden.

Aus vergleichbaren Gründen kann es vorteilhaft sein, dass die Auswertung der von dem Mikrowellenempfänger empfangenen Signale durch Mittel unterstützt beziehungsweise durchgeführt wird, die im Rahmen eines in dem Fahrzeug installierten Zugangskontroll- und Startsystems eingesetzt werden.

Weiterhin kann nützlich sein, dass mehrere unterschiedlich modulierende Backscatter-Vorrichtungen vorgesehen sind. Diese können beispielsweise in unterschiedlichen Höhen der Rücksitzlehne angebracht sein. Wenn diese Reflektoren unterschiedlich kodiert sind, kann zusätzlich zur grundsätzlichen Erkennung der Sitzbelegung die Größe des Fahrzeuginsassen und seine Position auf dem Sitz erkannt werden. Diese Information kann beispielsweise beim Auslösen eines Airbags beziehungsweise von mehreren Airbags an unterschiedlichen Positionen berücksichtigt werden.

Das erfindungsgemäße System ist in vorteilhafter Weise so ausgebildet, dass der Strahlungsweg geradlinig verläuft. Wenn im vorliegenden Zusammenhang von einem geradlinig verlaufenden Strahlungsweg die Rede ist, so ist dies auf die Ausbreitung der Strahlung ohne Beugungserscheinungen bezogen. Die vorliegenden Ausführungen beziehen sich somit auf die geometrische Anordnung der Komponenten. Es besteht also eine direkte Sichtverbindung zwischen Sender, Reflektor und Empfänger. Auf diese Weise wird ein besonders einfaches System zur Verfügung gestellt.

Es kann aber auch nützlich sein, dass der Strahlungsweg auf Umwegen verläuft. Die Mikrowellenstrahlung kann mittels leitfähiger, im Fahrzeug verbauter Materialien durch das Fahrzeug gelenkt werden, so dass eine gezielte Ausleuchtung bestimmter Zonen erfolgen kann, ohne dass zusätzliche Mikrowellensende- und -empfangsvorrichtungen erforderlich wären.

Die Erfindung baut auf dem gattungsgemäßen Verfahren dadurch auf, dass die Position des Objekts in dem Strahlungsweg auf der Grundlage der Beugung der Mikrowellen um das Objekt die empfangene Intensität beeinflusst und dass die empfangene Intensität Informationen über die Position des Objekts liefert.

Auf der Grundlage des erfindungsgemäßen Verfahrens werden die Vorteile und Besonderheiten des erfindungsgemäßen Systems umgesetzt. Dies gilt auch für die nachfolgend angegebenen besonders bevorzugten Ausführungsformen des erfindungsgemäßen Verfahrens.

Erfindungsgemäß erfolgt auf dem Strahlungsweg mindestens ein Reflektieren, wobei der Strahlungsweg in mindestens einen ersten Strahlungsweg und mindestens einen zweiten Strahlungsweg aufgeteilt wird.

Das Reflektieren erfolgt dabei durch einen modulierenden Backscatter-Prozess.

Die Erfindung kann in der Weise besonders vorteilhaft weitergebildet sein, dass die von der Mikrowellenstrahlung zurückgelegte Wegstrecke durch Laufzeitmessung ermittelt wird, insbesondere dann, wenn die Strahlung unmoduliert reflektiert wird.

Das erfindungsgemäße Verfahren ist in vorteilhafter Weise dadurch weitergebildet, dass die Position eines Sitzes ermittelt wird und dass aus dem Ergebnis des Ermittelns der Wegstrecke und dem Ergebnis des Ermittelns der Position des Sitzes ermittelt wird, ob sich die empfangene Strahlung über den Strahlungsweg ausgebreitet hat.

Das erfindungsgemäße Verfahren ist insbesondere dadurch in vorteilhafter Weise weitergebildet, dass der mindestens eine erste Strahlungsweg und der mindestens eine zweite Strahlungsweg identisch sind.

Es ist besonders nützlich, dass in Abhängigkeit der von dem Mikrowellenempfänger empfangenen Strahlung Funktionen im Fahrzeug getriggert, gesperrt oder freigegeben werden.

Das erfindungsgemäße Verfahren kann beispielsweise auch so ausgebildet sein, dass zum Reflektieren eine elektrisch leitfähige Folie verwendet wird.

Das erfindungsgemäße Verfahren kann dadurch weitergebildet sein, dass der Backscatter-Prozess durch eine passive, eine semipassive, semiaktive oder eine aktive Backscatter-Vorrichtung realisiert wird.

Das erfindungsgemäße Verfahren kann in besonders vorteilhafter Weise dadurch weitergebildet sein, dass das Aussenden und/oder das Empfangen auf der Grundlage eines in dem Fahrzeug installierten Zugangskontroll- und Startsystems erfolgt.

Aus vergleichbaren Gründen kann es vorteilhaft sein, dass die Auswertung der empfangenen Signale durch Mittel unterstützt beziehungsweise durchgeführt wird, die im Rahmen eines in dem Fahrzeug installierten mikrowellenbasierten Zugangskontroll- und Startsystems eingesetzt werden.

Weiterhin kann nützlich sein, dass der Backscatter-Prozess durch mehrere unterschiedlich modulierende Backscatter-Vorrichtungen erfolgt.

Das erfindungsgemäße Verfahren ist in vorteilhafter Weise so ausgebildet, dass der Strahlungsweg geradlinig verläuft.

Es kann aber auch nützlich sein, dass der Strahlungsweg auf Umwegen verläuft.

Der Erfindung liegt die Erkenntnis zugrunde, dass eine besonders zuverlässige und dennoch einfache und kostengünstige Sitzbelegungserkennung zur Verfügung gestellt werden kann, indem als Reflektor eine modulierende Backscatter-Vorrichtung eingesetzt wird.

Ebenfalls kann die Sicherheit des Systems dadurch verbessert werden, dass der Reflexionsort der Mikrowellenstrahlung durch eine separat ermittelte Sitzposition auf der Grundlage von Laufzeitmessungen überprüft wird.

Weiterhin können in vorteilhafter Weise Beugungserscheinungen der Mikrowellenstrahlung genutzt werden. Aufgrund der starken aber nicht vollständigen Absorption von Mikrowellenstrahlung im menschlichen Körper bestehen Vorteile bei der Verwendung von Mikrowellenstrahlung im Vergleich zur Verwendung von anderen Wellenformen, zum Beispiel Ultraschall, Laserstrahlung beziehungsweise Licht und Infrarotstrahlung. Die Ausbreitung der Mikrowellenstrahlung erfolgt unabhängig vom Druck, der Temperatur, der Helligkeit und sonstiger Umgebungsbedingungen. Das Messverfahren ist aufgrund der Einfachheit der Auswertung sehr schnell, so dass eine dynamische Messung, beispielsweise erst im Fall eines Aufpralls, möglich ist.

Weitere Vorzüge der Erfindung sind darin zu erkennen, dass eine Erkennung der Sitzbelegung mit sehr hoher Geschwindigkeit stattfinden kann. Die Zeit für die Erfassung kann beispielsweise im Millisekundenbereich liegen. Hierdurch ist es möglich, der Airbagsteuerung eine Dynamik zu vermitteln, die es beispielsweise gestattet, nach bereits erfolgter Zündung eines Airbags in Abhängigkeit der Sitzbelegung beziehungsweise der Position/Neigung der Person auf dem Sitz die Füllung des Airbags zu beeinflussen, vorzugsweise durch Druckverminderung.

Die Erfindung wird nun mit Bezug auf die begleitenden Zeichnungen anhand besonders bevorzugter Ausführungsformen beispielhaft erläutert.

Es zeigen:
- Figur 1: eine bevorzugte Ausführungsform eines erfindungsgemäßen System;
- Figur 2: die Ausführungsform gemäß Figur 1 mit einer Person in einer ersten Sitzposition;
- Figur 3: die Ausführungsform gemäß Figur 1 mit einer Person in einer zweiten Sitzposition;
- Figur 4: die Ausführungsform gemäß Figur 1 mit einer Sitzbelegung durch einen Babysitz;
- Figur 5: eine weitere bevorzugte Ausführungsform eines erfindungsgemäßen Systems mit einer ersten Person;
- Figur 6: die Ausführungsform gemäß Figur 5 mit einer zweiten Person; und
- Figur 7: eine Schnittansicht von oben auf die in Figur 6 dargestellte Anordnung.

Bei der nachfolgenden Beschreibung von bevorzugten Ausführungsformen der vorliegenden Erfindung bezeichnen gleiche Bezugszeichen gleiche oder vergleichbare Komponenten.

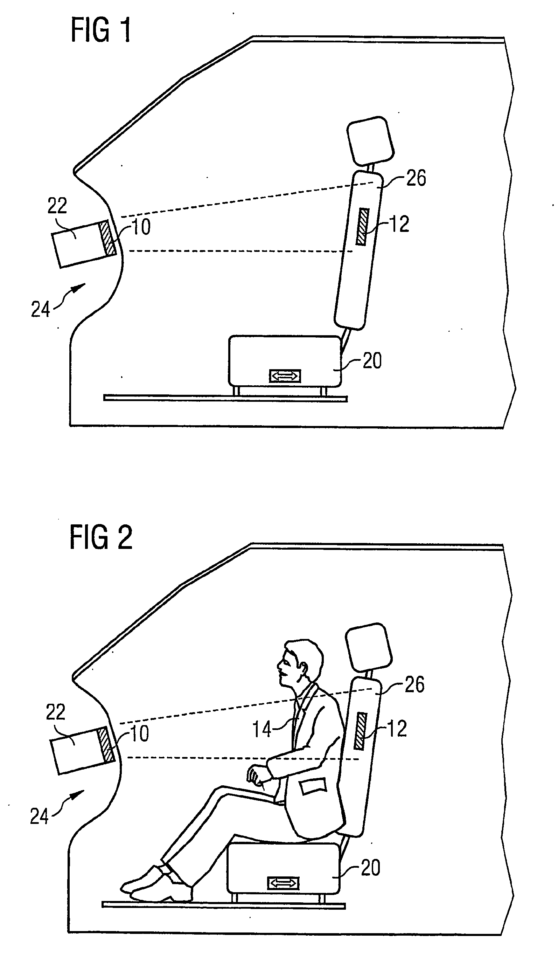

Figur 1 zeigt eine bevorzugte Ausführungsform eines erfindungsgemäßen System. Eine Mikrowellensende- und -empfangsvorrichtung 10 ist im Armaturenbrett beziehungsweise im Cockpit 24 eines Fahrzeugs angeordnet. In einer Lehne 26 eines Sitzes 20 ist ein Reflektor 12 angeordnet, der als modulierender Backscatter ausgebildet ist, beispielsweise als elektrisch leitende Folie. Der Sitz 20 kann in üblicher Weise verschoben werden, wobei besonders bevorzugt ist, wenn die Position des Sitzes 20 ermittelt werden kann.

Von der Mikrowellensende- und -empfangsvorrichtung 10 wird Mikrowellenstrahlung in Richtung auf den Reflektor 12 ausgesendet. Diese Mikrowellenstrahlung wird von dem Reflektor 12 reflektiert und somit zu der Mikrowellensende- und -empfangsvorrichtung 10 zurückgesendet.

Die Reflexion 12 erfolgt im Rahmen eines modulierenden Backscatter-Prozesses, wobei der reflektierten Strahlung eine Kodierung beispielsweise durch Modulation aufprägt werden kann. Hierzu kann der Reflektor 12 als passive, semipassive, semiaktive oder aktive Backscatter-Vorrichtung ausgelegt sein.

In einer Steuereinheit 22 können die vom Reflektor 12 ausgesendeten Signale hinsichtlich Entfernung, Pegel und Güte ausgewertet werden.

Bei der in Figur 1 dargestellten Situation befindet sich keine Person auf dem Sitz 20. Daher wird das reflektierte Signal mit einem hohen Pegel und mit einer hohen Güte empfangen.

Neben der Ausführungsform mit einem Reflektor 12 im Sitz 20 ist es ebenfalls möglich, die vorliegende Erfindung ohne die Verwendung eines Reflektors umzusetzen. In diesem Fall kann beispielsweise ein Mikrowellenempfänger im Sitz 20 angeordnet sein, beispielsweise an der Stelle, an der in Figur 1 der Reflektor 12 platziert ist. Diese Positionen von Empfänger und Reflektor können in einer weiteren Ausführungsform auch ausgetauscht sein. Diese Prinzipien gelten auch für die nachfolgend dargestellten Ausführungsformen der vorliegenden Erfindung.

Figur 2 zeigt die Ausführungsform gemäß Figur 1 mit einer Person in einer ersten Sitzposition. In dieser Darstellung sitzt eine Person 14 ordnungsgemäß auf dem Sitz 20. Sie deckt den Reflektor 12 ab. Aus diesem Grund empfängt die Mikrowellensende- und -empfangsvorrichtung 10 ein Signal, das um viele Größenordnungen, beispielsweise um sechs Größenordnungen, kleiner ist als das Signal ohne Sitzbelegung. In diesem Fall kann das Auslösen des Airbags freigegeben werden, so dass dieser im Fall eines Aufpralls auslöst.

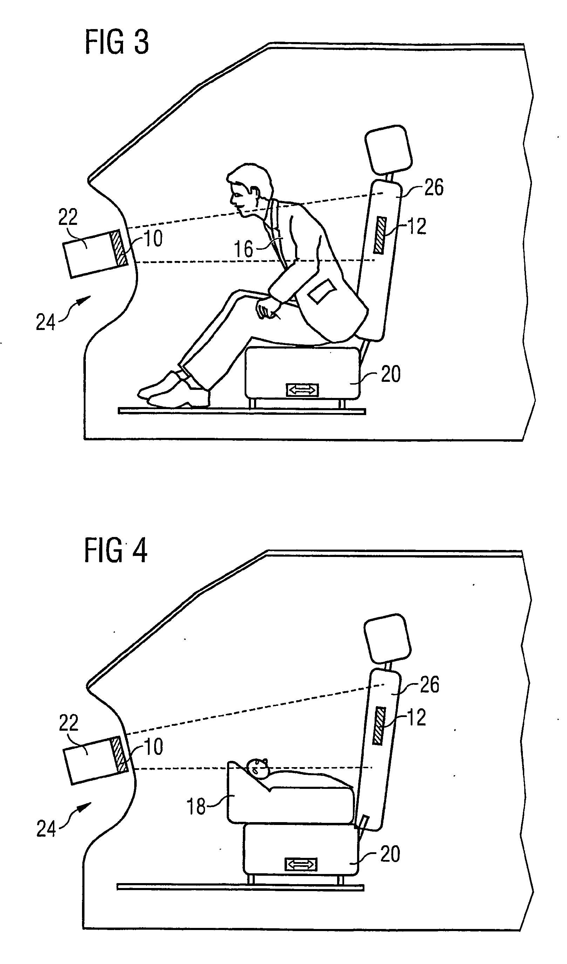

Figur 3 zeigt die Ausführungsform gemäß Figur 1 mit einer Person in einer zweiten Sitzposition. Die hier dargestellte Person 16 neigt sich nach vorne. Befindet sich der Oberkörper in einem ausreichenden Maße vor dem Reflektor 12, so kann wieder eine ausreichende Intensität von der Mikrowellensende- und -empfangsvorrichtung zum Reflektor und umgekehrt vom Reflektor zu der Mikrowellensende- und -empfangsvorrichtung gesendet werden. Die Intensität kann zur Erkennung des Neigungswinkels der Person verwendet werden. Ab einem bestimmten Neigungswinkel ist ein Auslösen des Airbags aufgrund von Kopfverletzungen nicht sinnvoll; man spricht dann von dem Out-of-Position-Fall. Wird der Reflektor und damit der Out-of-Position-Fall erkannt, kann ein Auslösen des Airbags verhindert werden. Je nach Wellenlänge, Pegel beziehungsweise Intensität, Reflektorfläche, Anbringung von Reflektor und Mikrowellensende- und -empfangsvorrichtung, Auswertealgorithmus, etc. ist der kritische Neigungswinkel, ab dem der Out-of-Position-Fall erkannt wird, einstellbar.

Figur 4 zeigt die Ausführungsform gemäß Figur 1 mit einer Sitzbelegung durch einen Babysitz. Hier befindet sich ein Baby in einem Kindersitz, vorliegend in einem sogenannten Reboard-Sitz 18. Dieser ist ordnungsgemäß auf dem Beifahrersitz 20 befestigt. Aufgrund der relativen Positionen von Mikrowellensende- und -empfangsvorrichtung 10, Reflektor 12 und Reboard-Sitz 18 findet nur eine geringe Dämpfung der Mikrowellenstrahlung statt. Folglich wird ein Auslösen des Airbags verhindert. Zusätzlich ist es möglich und unter Umständen sehr sinnvoll, einen Reflektor an der Rückseite des Reboard-Sitzes 18 zu befestigen. Damit kann, beispielsweise bei spezieller Modulation der Mikrowellenstrahlung durch diesen Reflektor oder aufgrund einer Laufzeitmessung, die Situation mit Kindersitz 18 auf dem Sitz 22 von der Situation ohne Objekt auf dem Sitz 20 unterschieden werden.

Wird bei dem erfindungsgemäßen System der Reflektor 12 beispielsweise mit einem metallischen Gegenstand abgeschirmt, so führt dies zu einer starken Reflexion. Die Intensität dieser Reflexion kann möglicherweise in derselben Größenordnung liegen wie die Intensität der Reflexion durch den Reflektor 12. Es gibt nun verschiedene Möglichkeiten, wie die Steuereinheit 22 die unterschiedlichen Situationen erkennen kann. Da der Reflektor eine modulierende Backscatter-Vorrichtung mit einer eindeutigen Kodierung ist, wird auf dieser Grundlage die Reflexion durch den abschattenden metallischen Gegenstand eindeutig erkannt. Zusätzlich kann die Reflexion durch einen abschattenden metallischen Gegenstand auf der Grundlage einer Laufzeitmessung erkannt werden, insbesondere wenn man die Laufzeit mit der tatsächlichen Sitzposition vergleicht, die durch einen zusätzlichen Sensor ermittelt werden kann.

Ebenfalls ist es vorteilhaft, dass Gegenstände ohne oder mit geringer elektrischer Leitfähigkeit vor dem Reflektor 12 den Reflektor nur geringfügig abschirmen. Die von der Steuereinheit empfangenen Signale entsprechen daher der Situation "leerer Sitz", so dass in richtiger Weise ein Auslösen des Airbags gesperrt wird.

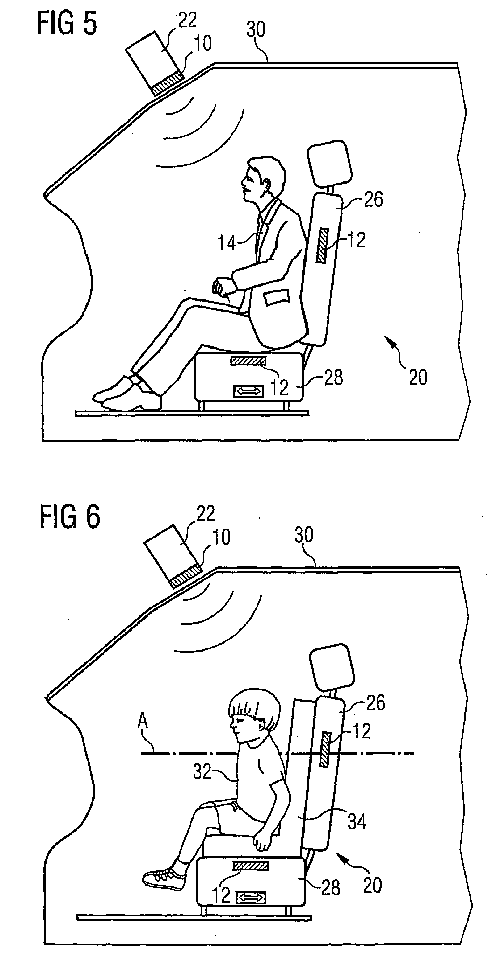

Figur 5 zeigt eine weitere bevorzugte Ausführungsform eines erfindungsgemäßen Systems mit einer ersten Person. In diesem Ausführungsbeispiel sind zwei Reflektoren 12 im Fahrzeugsitz 20 eingebaut. Ein Reflektor 12 ist in der Rückenlehne 26 angeordnet; ein weiterer Reflektor 12 ist in der Sitzfläche 28 angeordnet. Die Steuereinheit 22 mit Mikrowellensender und - empfänger 10 ist in der Dachbedieneinheit 30 eines Fahrzeugs angeordnet.

Sitzt eine erwachsene Person 14 ordnungsgemäß auf dem Sitz, so deckt sie die Reflektoren 12 ab, und die Steuereinheit 22 empfängt einen um mehrere Größenordnungen kleineren Pegel als im Falle eines leeren Sitzes 20. Insoweit arbeitet das System gemäß Figur 5 in vergleichbarer Weise zu den im Zusammenhang mit den Figuren 1 bis 4 beschriebenen Systemen. Da nun jedoch ein zusätzlicher Reflektor 12 in der Sitzfläche 28 angeordnet ist, kann das Vorbeugen der Person 14 mit größerer Zuverlässigkeit.erkannt werden. In dem Fall gibt die Person 14 nämlich den Reflektor 12 frei, so dass Mikrowellenstrahlung zumindest aufgrund von Beugungserscheinungen zwischen dem Mikrowellensender/-empfänger 10 und dem Reflektor 12 in der Rückenlehne 26 ihren Weg finden kann. Der Reflektor 12 in der Sitzfläche 28 ist hingegen nach wie vor vollständig von der Person 14 bedeckt, so dass dies als zusätzliche Information dafür verwendet werden kann, dass es sich um eine sich vorbeugende Person 14 und nicht um einen leeren Sitz 20 handelt.

Figur 6 zeigt die Ausführungsform gemäß Figur 5 mit einer zweiten Person. Die hier dargestellte Situation kann auf der Grundlage des erfindungsgemäßen Systems auch von einer sich vorbeugenden erwachsenen Person unterschieden werden, wie sie anhand von Figur 5 erläutert wurde. Ein Kind 32 sitzt auf einem Kindersitz 34, der auf dem Sitz 20 angeordnet ist. In dem Sitz 20 sind wiederum zwei Reflektoren 12 angeordnet, einer in der Rückenlehne 26 und einer in der Sitzfläche 28. Aufgrund des Kindersitzes 34, der im Allgemeinen die Mikrowellen sehr viel weniger absorbiert als der Körper des Kindes 32, können, insbesondere aufgrund von Beugungseigenschaften, Mikrowellen ihren Weg zwischen Mikrowellensender/-empfänger 10 und den Reflektoren 12 in der Rückenlehne 26 und der Sitzfläche 28 finden. Der Reflektor 12 in der Sitzfläche 28 empfängt daher eine höhere Intensität als er empfangen könnte, wenn eine erwachsene Person direkt auf der Sitzfläche 28 säße.

Somit lassen sich durch geeignete Anordnung von mehreren Reflektoren 12 und dementsprechende geeignete Anordnung des Mikrowellensender/-empfängers 10 unterschiedliche Situationen im Hinblick auf die Sitzbelegung im Fahrzeug erkennen.

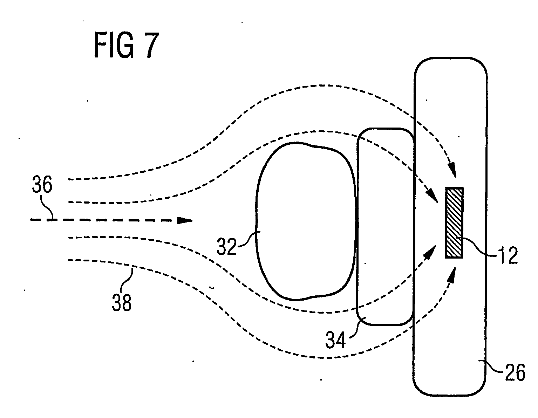

Figur 7 zeigt eine Schnittansicht von oben auf die in Figur 6 dargestellte Anordnung. Der Schnitt in Figur 7 erfolgt entlang der in Figur 6 durch A gekennzeichneten Ebene. Es sind verschiedene Wege dargestellt, wie Mikrowellenstrahlung den Reflektor 12 in der Rückenlehne 26 erreichen kann, wobei von der Situation eines Kindes 32 auf einem Kindersitz 34 ausgegangen wird. Zum einen gibt es den direkten Weg 36 zwischen Mikrowellensender/-empfänger 10 und dem Reflektor 12, der in der vorliegenden Situation durch das Kind 32 abgeschirmt ist. Aufgrund des Abstandes zwischen dem Kind 32 und dem Reflektor 12, der durch den Kindersitz 34 in jedem Fall aufrechterhalten wird, können jedoch Mikrowellen zum Beispiel durch Beugung um den Körper und durch Reflexion beziehungsweise Streuung auch oft auf indirekten Wegen 38 vom Mikrowellensender/-empfänger 10 zum Reflektor 12 und in umgekehrte Richtung gelangen. Dies wird durch den Kindersitz 34 nur unwesentlich behindert, da er im Vergleich zum menschlichen Körper ein sehr viel geringeres Absorptionsvermögen aufweist.

Die Erfindung lässt sich folgendermaßen zusammenfassen. Ein System zum Erkennen der Sitzbelegung in einem Fahrzeug umfasst einen Mikrowellensender 10, einen Mikrowellenempfänger 10 und vorzugsweise eine modulierende Backscatter-Vorrichtung 12 als Reflektor, so dass die von dem Empfänger 10 empfangene Strahlung eindeutig dem Reflektor 12 zugeordnet werden kann. Befindet sich zwischen diesen Gegenständen eine Person, so wird die Mikrowellenstrahlung abgeschwächt. Zusätzlich kann vorgesehen sein, eine Laufzeitmessung der Mikrowellenstrahlung durchzuführen und diese zusammen mit einer Auswertung der Sitzposition weiterzuverarbeiten, insbesondere wird dann eine Laufzeitmessung und damit eine Abstandsmessung vorgenommen, wenn die Strahlung durch den Reflektor nicht moduliert wird.

Es ist möglich, die Beugungseigenschaften der Mikrowellenstrahlung um das Objekt zu nutzen, um weitere Informationen über die Sitzposition zu erhalten. Die Erkennung, ob und gegebenenfalls wie ein Sitz belegt ist, kann in vorteilhafter Weise zum Sperren beziehungsweise zum Freigeben eines Airbags genutzt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. System zum Erkennen der Sitzbelegung in einem Fahrzeug, mit
- mindestens einem Mikrowellensender (10),
- mindestens einem Mikrowellenempfänger (10) und
- mindestens einem Reflektor (12),
- wobei der mindestens eine Mikrowellensender (10) und der mindestens eine Mikrowellenempfänger (10) so angeordnet sind,
- dass die von dem mindestens einen Mikrowellensender (10) ausgesendete Mikrowellenstrahlung über einen Strahlungsweg den mindestens einen Mikrowellenempfänger (10) zumindest bei unbelegtem Sitz erreichen kann und
- dass sich in Abhängigkeit der Sitzbelegung ein Objekt (14, 16, 18) in dem Strahlungsweg befinden kann, so dass die von dem Mikrowellenempfänger (10) empfangene Strahlung in Abhängigkeit der Sitzbelegung beeinflusst werden kann,
**dadurch gekennzeichnet,**
- **dass** der mindestens eine Reflektor (12) eine modulierende Backscatter-Vorrichtung ist und
- **dass** die von dem Mikrowellenempfänger (10) empfangene, durch Beugungserscheinungen beeinflusste Intensität Informationen über die Position des Objekts in dem Strahlungsweg liefert.

2. System nach einem der vorangehenden Ansprüche,
**dadurch gekennzeichnet,**
**dass** der mindestens eine Mikrowellensender und der mindestens eine Mikrowellenempfänger als mindestens eine Mikrowellensende- und -empfangsvorrichtung (10) mit einer Sende- und Empfangsantenne realisiert sind.

3. System nach Anspruch 1 oder 2,
**dadurch gekennzeichnet,**
**dass** eine Steuereinheit (22) vorgesehen ist, die in Abhängigkeit der von dem Mikrowellenempfänger empfangenen Strahlung Funktionen im Fahrzeug triggert, sperrt oder freigibt.

4. System nach einem der vorangehenden Ansprüche,
**dadurch gekennzeichnet,**
**dass** der mindestens eine Reflektor eine elektrisch leitfähige Folie (12) ist.

5. System nach einem der vorangehenden Ansprüche,
**dadurch gekennzeichnet,**
**dass** die Backscatter-Vorrichtung (12) als passive, semipassive, semiaktive oder aktive Backscatter-Vorrichtung realisiert ist.

6. System nach einem der vorangehenden Ansprüche,
**dadurch gekennzeichnet,**
**dass** der mindestens eine Mikrowellensender (10) und/oder der mindestens eine Mikrowellenempfänger (10) Bestandteile eines in dem Fahrzeug installierten Zugangskontroll- und Startsystems sind.

7. System nach einem der vorangehenden Ansprüche,
**dadurch gekennzeichnet,**
**dass** die Auswertung der von dem Mikrowellenempfänger (10) empfangenen Signale durch Mittel unterstützt beziehungsweise durchgeführt wird, die im Rahmen eines in dem Fahrzeug installierten Zugangskontroll- und Startsystems eingesetzt werden.

8. System nach einem der vorangehenden Ansprüche,
**dadurch gekennzeichnet,**
**dass** mehrere unterschiedlich modulierende Backscatter-Vorrichtungen vorgesehen sind.

9. System nach einem der vorangehenden Ansprüche,
**dadurch gekennzeichnet,**
**dass** der Strahlungsweg geradlinig verläuft.

10. System nach einem der Ansprüche 1 bis 8,
**dadurch gekennzeichnet,**
**dass** der Strahlungsweg auf Umwegen verläuft.

11. Verfahren zum Erkennen der Sitzbelegung in einem Fahrzeug, mit den Schritten
- Aussenden von Mikrowellenstrahlung,
- Reflektieren von Mikrowellenstrahlung und
- Empfangen der Mikrowellenstrahlung,
- wobei
- sich die ausgesendete Mikrowellenstrahlung über einen Strahlungsweg ausbreitet und
- sich in Abhängigkeit der Sitzbelegung ein Objekt in dem Strahlungsweg befinden kann, so dass die empfangene Strahlung in Abhängigkeit der Sitzbelegung beeinflusst werden kann,
**dadurch gekennzeichnet,**
- **dass** das Reflektieren durch einen modulierenden Backscatter-Prozess erfolgt und
- **dass** die empfangene durch Beugungserscheinungen beeinflusste Intensität Informationen über die Position des Objekts in dem Strahlungsweg liefert.

12. Verfahren nach Anspruch 11,
**dadurch gekennzeichnet,**
**dass** in Abhängigkeit der empfangenen Strahlung Funktionen im Fahrzeug getriggert, gesperrt oder freigegeben werden.

13. Verfahren nach Anspruch 11 oder 12,
**dadurch gekennzeichnet,**
**dass** zum Reflektieren eine elektrisch leitfähige Folie verwendet wird.

14. Verfahren nach einem der Ansprüche 11 bis 13,
**dadurch gekennzeichnet,**
**dass** der Backscatter-Prozess durch eine passive, eine semipassive, semiaktive oder einen aktive Backscatter-Vorrichtung realisiert wird.

15. Verfahren nach einem der Ansprüche 11 bis 14,
**dadurch gekennzeichnet,**
**dass** das Aussenden und/oder das Empfangen auf der Grundlage eines in dem Fahrzeug installierten Zugangskontroll- und Startsystems erfolgt.

16. Verfahren nach einem der Ansprüche 11 bis 15,
**dadurch gekennzeichnet,**
**dass** die Auswertung der empfangenen Signale durch Mittel unterstützt beziehungsweise durchgeführt wird, die im Rahmen eines in dem Fahrzeug installierten mikrowellenbasierten Zugangskontroll- und Startsystems eingesetzt werden.

17. Verfahren nach einem der Ansprüche 11 bis 16,
**dadurch gekennzeichnet,**
**dass** der Backscatter-Prozess durch mehrere unterschiedlich modulierende Backscatter-Vorrichtungen erfolgt.

18. Verfahren nach einem der Ansprüche 11 bis 17,
**dadurch gekennzeichnet,**
**dass** der Strahlungsweg geradlinig verläuft.

19. Verfahren nach einem der Ansprüche 11 bis 17,
**dadurch gekennzeichnet,**
**dass** der Strahlungsweg auf Umwegen verläuft.

## Claims

1. System for detecting the seat occupancy in a vehicle, with
- at least one microwave transmitter (10),
- at least one microwave receiver (10), and
- at least one reflector (12),
- in which the one or more microwave transmitters (10) and the one or more microwave receivers (10) are arranged so that
- the microwave radiation transmitted by the one or more microwave transmitters (10) over a radiation path can reach the one or more microwave receivers (10) at least when the seat is unoccupied and
- depending on the seat occupancy, an object (14, 16, 18) can be on the radiation path, such that the radiation received by the microwave receiver (10) can be influenced in accordance with the seat occupancy,
**characterised in that**
- the minimum of one reflector (12) is a modulating back-scatter device and
- the intensity received by the microwave receiver (10) and affected by diffraction fringes provides information on the position of the object in the radiation path.

2. System according to one of the preceding claims,
**characterised in that**
the one or more microwave transmitters and the one or more microwave receivers are produced as one or more microwave transmitting and receiving devices (10) with transmitting and receiving antennas.

3. System according to claim 1 or 2,
**characterised in that**
a control unit (22) which triggers, disables or enables functions in the vehicle depending on the radiation received by the microwave receiver is provided.

4. System according to one of the preceding claims,
**characterised in that**
the minimum of one reflector is an electrically conducting film (12).

5. System according to one of the preceding claims,
**characterised in that**
the back-scatter device (12) is produced as a passive, semipassive, semi-active or active back-scatter device.

6. System according to one of the preceding claims,
**characterised in that**
the one or more microwave transmitters (10) and/or the one or more microwave receivers (10) are components of an access control and start-up system installed in the vehicle.

7. System according to one of the preceding claims,
**characterised in that**
analysis of the signals received by the microwave receiver (10) is supported or carried out in ways which are used in the context of an access control and start-up system installed in the vehicle.

8. System according to one of the preceding claims,
**characterised in that**
a plurality of different modulating back-scatter devices are provided.

9. System according to one of the preceding claims,
**characterised in that**
the radiation path is a straight line.

10. System according to one of the claims 1 to 8,
**characterised in that**
the radiation path is a detour.

11. Method for detecting the seat occupancy in a vehicle, with the following steps:
- transmitting microwave radiation,
- reflecting microwave radiation and
- receiving microwave radiation,
- such that
- the transmitted microwave radiation propagates over a radiation path and
- depending on the seat occupancy, an object can be on the radiation path, such that the radiation received can be influenced in accordance with the seat occupancy,
**characterised in that**
- the reflection takes place by means of a modulating back-scatter process and
- the received intensity affected by diffraction fringes provides information on the position of the object in the radiation path.

12. Method according to claim 11,
**characterised in that**
functions in the vehicle are triggered, disabled or enabled depending on the radiation received.

13. Method according to claims 11 or 12,
**characterised in that**
an electrically conducting film is used for reflecting.

14. Method according to one of the claims 11 to 13,
**characterised in that**
the back-scatter process is produced by a passive, semipassive, semi-active or active back-scatter device.

15. Method according to one of the claims 11 to 14,
**characterised in that**
transmission and/or receiving take place on the basis of an access control and start-up system installed in the vehicle.

16. Method according to one of the claims 11 to 15,
**characterised in that**
analysis of the received signals is supported or carried out by means which are used in the context of a microwave-based access control and start-up system installed in the vehicle.

17. Method according to one of the claims 11 to 16,
**characterised in that**
the back-scatter process is produced by a plurality of different modulating back-scatter devices.

18. Method according to one of the claims 11 to 17,
**characterised in that**
the radiation path is a straight line.

19. Method according to one of the claims 11 to 17,
**characterised in that**
the radiation path is a detour.

## Revendications

1. Système de détection de l'occupation d'un siège dans un véhicule automobile, comportant
- au moins un émetteur de micro-ondes (10),
- au moins un récepteur de micro-ondes (10) et
- au moins un réflecteur (12),
- ledit au moins un émetteur de micro-ondes (10) et ledit au moins un récepteur de micro-ondes (10) étant disposés de telle sorte,
- que le faisceau de micro-ondes émis par ledit au moins un émetteur de micro-ondes (10) peut parvenir suivant une trajectoire de rayonnement sur ledit au moins un récepteur de micro-ondes (10) au moins lorsque le siège est inoccupé et
- que, en fonction de l'occupation du siège, un objet (14, 16, 18) peut se situer dans la trajectoire de rayonnement, de telle sorte que le faisceau reçu par le récepteur de micro-ondes (10) peut être influencé en fonction de l'occupation du siège,
**caractérisé**
- **en ce que** le réflecteur (12) est un dispositif de rétrodiffusion à modulation (backscatter), et
- **en ce que** l'intensité reçue par le récepteur de micro-ondes (10) et influencée par des phénomènes de diffraction fournit des informations sur la position de l'objet dans la trajectoire de rayonnement.

2. Système selon l'une quelconque des revendications précédentes, **caractérisé en ce que** ledit au moins un émetteur de micro-ondes et ledit au moins un récepteur de micro-ondes sont réalisés sous la forme d'au moins un dispositif d'émission et de réception de micro-ondes (10) avec une antenne d'émission et de réception.

3. Système selon la revendication 1 ou 2, **caractérisé en ce qu'**il est prévu une unité de commande (22) qui, en fonction du faisceau capté par le récepteur de micro-ondes, déclenche, verrouille ou débloque des fonctions dans le véhicule.

4. Système selon l'une quelconque des revendications précédentes, **caractérisé en ce que** ledit au moins un réflecteur est un film (12) électroconducteur.

5. Système selon l'une quelconque des revendications précédentes, **caractérisé en ce que** le dispositif de rétrodiffusion (12) est réalisé sous forme de dispositif de rétrodiffusion passif, semi-passif, semi-actif ou actif.

6. Système selon l'une quelconque des revendications précédentes, **caractérisé en ce que** ledit au moins un émetteur de micro-ondes (10) et/ou ledit au moins un récepteur de micro-ondes (10) font partie intégrante d'un système de contrôle d'accès et de démarrage, installé dans le véhicule.

7. Système selon l'une quelconque des revendications précédentes, **caractérisé en ce que** l'analyse des signaux reçus par le récepteur de micro-ondes (10) est assistée ou effectuée par des moyens qui sont utilisés dans le cadre d'un système de contrôle d'accès et de démarrage installé dans le véhicule.

8. Système selon l'une quelconque des revendications précédentes, **caractérisé en ce qu'**il est prévu plusieurs dispositifs de rétrodiffusion à modulation différente.

9. Système selon l'une quelconque des revendications précédentes, **caractérisé en ce que** la trajectoire de rayonnement est rectiligne.

10. Système selon l'une quelconque des revendications 1 à 8, **caractérisé en ce que** la trajectoire de rayonnement est une trajectoire déviée.

11. Procédé de détection de l'occupation d'un siège dans un véhicule automobile, avec les étapes :
- émission d'un faisceau de micro-ondes,
- réflexion d'un faisceau de micro-ondes et
- réception du faisceau de micro-ondes,
- sachant que
- le faisceau de micro-ondes émis se propage suivant une trajectoire de rayonnement, et
- en fonction de l'occupation du siège, un objet peut se situer dans la trajectoire de rayonnement, de telle sorte que le faisceau reçu peut être influencé en fonction de l'occupation du siège,
**caractérisé**
- **en ce que** la réflexion est effectuée par un dispositif de rétrodiffusion à modulation et
- **en ce que** l'intensité reçue et influencée par des phénomènes de diffraction fournit des informations sur la position de l'objet dans la trajectoire de rayonnement.

12. Procédé selon la revendication 11, **caractérisé en ce que**, en fonction du faisceau capté, des fonctions dans le véhicule sont déclenchées, verrouillées ou débloquées.

13. Procédé selon la revendication 11 ou 12, **caractérisé en ce qu'**un film électroconducteur est utilisé pour la réflexion.

14. Procédé selon l'une quelconque des revendications 11 à 13, **caractérisé en ce que** le processus de rétrodiffusion est mis en oeuvre par un dispositif de rétrodiffusion passif, semi-passif, semi-actif ou actif.

15. Procédé selon l'une quelconque des revendications 11 à 14, **caractérisé en ce que** l'émission et/ou la réception sont effectués sur la base d'un système de contrôle d'accès et de démarrage, installé dans le véhicule.

16. selon l'une quelconque des revendications 11 à 15, **caractérisé en ce que** l'analyse des signaux reçus est assistée ou effectuée par des moyens qui sont utilisés dans le cadre d'un système de contrôle d'accès et de démarrage, basé sur les micro-ondes et installé dans le véhicule.

17. Procédé selon l'une quelconque des revendications 11 à 16, **caractérisé en ce que** le processus de rétrodiffusion est mis en oeuvre par plusieurs dispositifs de rétrodiffusion à modulation différente.

18. Procédé selon l'une quelconque des revendications 11 à 17, **caractérisé en ce que** la trajectoire de rayonnement est rectiligne.

19. Procédé selon l'une quelconque des revendications 11 à 17, **caractérisé en ce que** la trajectoire de rayonnement est une trajectoire déviée.
